# EUROPEAN PATENT APPLICATION

(11) **EP 4 521 717 A1**
(43) Date of publication of application: **12.03.2025**
(21) Application number: 23815161.7
(22) Date of filing: 29.05.2023
(51) Int. Cl.: H04L 67/141

(54) **COMMUNICATION METHOD BETWEEN VPCS BASED ON PUBLIC CLOUD, AND RELATED PRODUCT**

(30) Priority: 30.05.2022 CN 202210601054
(71) Applicant: Huawei Cloud Computing Technologies Co., Ltd., Guiyang, Guizhou 550025 (CN)
(72) Inventor: ZHU, Xiaoping, Guiyang, Guizhou 550025 (CN)
(74) Representative: Körber, Martin Hans
(86) International application number: PCT/CN2023/096910
(87) International publication number: WO 2023/231982

(57) **Abstract**

Embodiments of this application provide a method for communication between public cloud-based VPCs and a related product. The method includes the following steps. A cloud management platform determines first configuration information entered or selected by a tenant, and creates a global VPC based on the first configuration information. The cloud management platform determines second configuration information entered or selected by the tenant, and allocates, based on the second configuration information through the global VPC, a first network prefix to a first VPC located in a first region, and a second network prefix to a second VPC located in a second region, where the global VPC is used to implement cross-region communication between the first VPC and the second VPC based on the first network prefix and the second network prefix.

## Description

This application claims priority to Chinese Patent Application No. 202210601054.8, filed with the China National Intellectual Property Administration on May 30, 2022 and entitled "METHOD FOR COMMUNICATION BETWEEN PUBLIC CLOUD-BASED VPCS AND RELATED PRODUCT", which is incorporated herein by reference in its entirety.

### TECHNICAL FIELD

Embodiments of this application relate to the field of cloud computing technologies, and in particular, to a method for communication between public cloud-based virtual private clouds (virtual private clouds, VPCs) and a related product.

### BACKGROUND

A VPC is a virtual network environment created by a tenant, supports independent configuration and management of the tenant, has many advantages such as security and reliability, and therefore is widely used. During actual application, different VPCs need to communicate with each other. However, due to reasons such as private address planning, private addresses of the VPCs that need to communicate with each other may overlap. As a result, the VPCs cannot communicate with each other.

Currently, the following two methods are mainly used to implement communication between VPCs with a same private address: ① creating a VPC peering (VPC peering) connection between the VPCs; ② connecting the different VPCs via a transit gateway (transit gateway). In the two methods, the tenant need to manage the private addresses of the VPCs. In addition, resources cannot be migrated between the VPCs, and there is no bandwidth guarantee for communication between the VPCs.

Therefore, how to implement communication between the VPCs is still an urgent problem to be resolved currently in the field of cloud computing technologies.

### SUMMARY

Embodiments of this application provide a method for communication between public cloud-based VPCs and a related product, to implement communication between different VPCs. Based on this, a bandwidth for communication between the different VPCs can be further ensured, and resources can be migrated between the different VPCs as required. In addition, unified management of network addresses and routes of the VPCs can be implemented, to reduce manual workload.

According to a first aspect, an embodiment of this application provides a method for communication between public cloud-based VPCs. The method includes the following steps: A cloud management platform determines first configuration information entered or selected by a tenant, and creates a global VPC based on the first configuration information. The cloud management platform determines second configuration information entered or selected by the tenant; and allocates, based on the second configuration information through the global VPC, a first network prefix to a first VPC located in a first region, and a second network prefix to a second VPC located in a second region, where the global VPC is used to implement cross-region communication between the first VPC and the second VPC based on the first network prefix and the second network prefix. It can be seen that, by implementing the foregoing method, the first VPC and the second VPC have different network prefixes, so that communication between the first VPC and the second VPC can be implemented.

In a possible implementation of the first aspect, a region identifier in the first network prefix is different from a region identifier in the second network prefix. The region identifier in the first network prefix is used to identify the first VPC, and the region identifier in the second network prefix is used to identify the second VPC. In this way, the first network prefix is different from the second network prefix, so that communication between the first VPC and the second VPC is possible.

In a possible implementation of the first aspect, the method further includes: The cloud management platform allocates a network prefix to the global VPC, where the first network prefix and the second network prefix further include the network prefix of the global VPC.

In a possible implementation of the first aspect, the method further includes: The cloud management platform establishes a network connection between the first VPC and the global VPC, and a network connection between the second VPC and the global VPC. It should be understood that, with the network connection between the first VPC and the global VPC established, the first VPC may communicate with the global VPC. Similarly, with the network connection between the second VPC and the global VPC established, the second VPC may communicate with the global VPC. In this way, the first VPC and the second VPC may communicate with each other through the global VPC.

In a possible implementation of the first aspect, the global VPC stores the first network prefix, the second network prefix, and a routing relationship between the first network prefix and the second network prefix. In this way, automatic management of network addresses of the first VPC and the second VPC and routing between the first VPC and the second VPC may be implemented by using the global VPC.

In a possible implementation of the first aspect, the first VPC does not support communication with a third VPC. In this way, the first VPC and the third VPC are isolated from each other, to improve security of services deployed in the first VPC and the third VPC.

In a possible implementation of the first aspect, the method further includes: The cloud management platform sets an access control list (access control list, ACL) of the first VPC, where the ACL includes an entry used to block communication between the first VPC and the third VPC. In this way, the first VPC cannot receive a data flow from the third VPC, and cannot send a data flow to the third VPC, to implement isolation between the first VPC and the third VPC.

In a possible implementation of the first aspect, the first VPC includes a first subnet, and the method further includes: The cloud management platform allocates a network prefix to the first subnet through the global VPC, where the network prefix of the first subnet includes the first network prefix and a subnet identifier. In this way, it can be implemented that the global VPC manages a network address of a subnet in the first VPC.

In a possible implementation of the first aspect, the first subnet includes a virtual machine (virtual machine, VM), and the method further includes: The cloud management platform allocates a network prefix to the VM through the global VPC or the first VPC, where a region identifier in the network prefix of the VM indicates that the VM supports migration to a VPC managed by the global VPC and capable of communicating with the first VPC. The VPC managed by the global VPC and capable of communicating with the first VPC means a VPC that is allocated a network prefix by the global VPC and capable of communicating with the first VPC through the global VPC.

In a possible implementation of the first aspect, the region identifier in the network prefix of the VM is different from a region identifier in a network prefix of any VPC managed by the global VPC.

In a possible implementation of the first aspect, the VPC managed by the global VPC and capable of communicating with the first VPC includes the second VPC, and the method further includes: The cloud platform migrates the VM from the first VPC to the second VPC, where the VM after migration is located in a second subnet of the second VPC, and a subnet identifier in a network prefix of the second subnet is the same as the subnet identifier in the network prefix of the first subnet.

In a possible implementation of the first aspect, a network prefix of the VM after migration is the same as the network prefix of the VM before migration.

In the foregoing implementation, the VM in the first VPC may be migrated to another VPC across regions, to improve flexibility of service deployment.

In a possible implementation of the first aspect, the method further includes: The cloud management platform allocates a bandwidth to the global VPC, where a data flow passing through the global VPC meets a requirement of the bandwidth.

In a possible implementation of the first aspect, the method further includes: The cloud management platform attaches, based on an identifier of the global VPC, a corresponding flow label to the data flow passing through the global VPC; and then Obtains the requirement of the bandwidth based on the flow label, and then indicates forwarding of the data flow based on the requirement of the bandwidth.

It should be understood that communication between the first VPC and the second VCP needs to pass through the global VPC. Therefore, when a data flow passing through the global VPC can meet the foregoing requirement of the bandwidth, communication between the first VPC and the second VPC can also meet the foregoing requirement of the bandwidth, to improve quality of communication between the first VPC and the second VPC.

In a possible implementation of the first aspect, the network prefix of the global VPC is an IPv6 prefix applied for by the cloud management platform, or an IPv6 prefix generated by the cloud management platform, or an IPv6 prefix applied for by a tenant.

According to a second aspect, an embodiment of this application provides a cloud management platform, where the cloud management platform includes a determining module and a control module. The determining module is configured to determine first configuration information and second configuration information entered or selected by a tenant. The control module is configured to: create a global VPC based on the first configuration information, allocate, based on the second configuration information through the global VPC, a first network prefix to a first VPC located in a first region, and a second network prefix to a second VPC located in a second region, where the global VPC is used to implement cross-region communication between the first VPC and the second VPC based on the first network prefix and the second network prefix.

In a possible implementation of the second aspect, a region identifier in the first network prefix is different from a region identifier in the second network prefix. The region identifier in the first network prefix is used to identify the first VPC, and the region identifier in the second network prefix is used to identify the second VPC.

In a possible implementation of the second aspect, the control module is further configured to allocate a network prefix to the global VPC, where the first network prefix and the second network prefix further include the network prefix of the global VPC.

In a possible implementation of the second aspect, the apparatus further includes a network configuration module, and the module is configured to establish a network connection between the first VPC and the global VPC, and a network connection between the second VPC and the global VPC.

In a possible implementation of the second aspect, the global VPC stores the first network prefix, the second network prefix, and a routing relationship between the first network prefix and the second network prefix.

In a possible implementation of the second aspect, the first VPC does not support communication with a third VPC.

In a possible implementation of the second aspect, the network configuration module is further configured to set an ACL of the first VPC, where the ACL includes an entry used to block communication between the first VPC and the third VPC.

In a possible implementation of the second aspect, the first VPC includes a first subnet, and the control module is further configured to allocate a network prefix to the first subnet through the global VPC, where the network prefix of the first subnet includes the first network prefix and a subnet identifier.

In a possible implementation of the second aspect, the first subnet includes a VM, and the control module is further configured to allocate a network prefix to the VM through the global VPC or the first VPC, where a region identifier in the network prefix of the VM indicates that the VM supports migration to a VPC managed by the global VPC and capable of communicating with the first VPC. The VPC managed by the global VPC and capable of communicating with the first VPC means a VPC that is allocated a network prefix by the global VPC and capable of communicating with the first VPC through the global VPC.

In a possible implementation of the second aspect, the region identifier in the network prefix of the VM is different from a region identifier in a network prefix of any VPC managed by the global VPC.

In a possible implementation of the second aspect, the VPC managed by the global VPC and capable of communicating with the first VPC includes the second VPC, and the control module is further configured to migrate the VM from the first VPC to the second VPC, where the VM after migration is located in a second subnet of the second VPC, and a subnet identifier in a network prefix of the second subnet is the same as the subnet identifier in the network prefix of the first subnet.

In a possible implementation of the second aspect, a network prefix of the VM after migration is the same as the network prefix of the VM before migration.

In a possible implementation of the second aspect, the control module is further configured to allocate a bandwidth to the global VPC, where a data flow passing through the global VPC meets a requirement of the bandwidth.

In a possible implementation of the second aspect, the control module is further configured to: attach, based on an identifier of the global VPC, a corresponding flow label to the data flow passing through the global VPC; obtain a requirement of the bandwidth based on the flow label; and indicate forwarding of the data flow based on the requirement of the bandwidth.

In a possible implementation of the second aspect, the network prefix of the global VPC is an IPv6 prefix applied for by the cloud management platform, or an IPv6 prefix generated by the cloud management platform, or an IPv6 prefix applied for by a tenant.

According to a third aspect, an embodiment of this application provides a communication system, where the system includes a cloud management platform described in any one of the first aspect and implementations of the first aspect, and further includes a global VPC, a first VPC located in a first region, and a second VPC located in a second region.

According to a fourth aspect, an embodiment of this application provides a computing device. The computing device includes a processor and a memory. The processor executes computer program code in the memory to implement some or all methods described in any one of the first aspect and implementations of the first aspect.

According to a fifth aspect, an embodiment of this application provides a computer-readable storage medium, where the computer storage medium stores computer program code, and when the computer program code is executed by a computing device, the computing device performs some or all of methods described in any one of the first aspect and implementations of the first aspect.

### BRIEF DESCRIPTION OF DRAWINGS

FIG. 1 is a diagram of a structure of a communication system according to an embodiment of this application;
FIG. 2 is a diagram of a deployment manner of a cloud management platform according to an embodiment of this application;
FIG. 3 is a diagram of an application scenario of a cloud management platform according to an embodiment of this application;
FIG. 4 is a diagram of another application scenario of a cloud management platform according to an embodiment of this application;
FIG. 5 is a diagram of a deployment manner of clients that can communicate with a cloud management platform according to an embodiment of this application;
FIG. 6A and FIG. 6B are a schematic flowchart of a method for communication between public cloud-based VPCs according to an embodiment of this application;
FIG. 7 is a diagram of a creation interface of a global VPC according to an embodiment of this application;
FIG. 8 is another diagram of a creation interface of a global VPC according to an embodiment of this application;
FIG. 9 is a diagram of a creation interface of a first VPC according to an embodiment of this application;
FIG. 10 is a diagram of a resource configuration interface according to an embodiment of this application;
FIG. 11 is a diagram of a format of a network prefix of a resource according to an embodiment of this application;
FIG. 12 is another diagram of a format of a network prefix of a resource according to an embodiment of this application;
FIG. 13 is a schematic flowchart of a VM migration method according to an embodiment of this application;
FIG. 14 is a diagram of a structure of a cloud management platform according to an embodiment of this application;
FIG. 15 is a diagram of a structure of a computing device according to an embodiment of this application; and
FIG. 16 is a diagram of a computing device system according to an embodiment of this application.

### DESCRIPTION OF EMBODIMENTS

To make solutions provided in embodiments of this application clearer, before the solutions provided in embodiments of this application are specifically described, related terms in embodiments of this application are first described.

A VPC is a private and isolated virtual network environment created by a tenant in a public cloud. In other words, different VPCs are logically isolated from each other. The VPC supports independent configuration and management of the tenant. For example, the tenant may create a plurality of subnets in the VPC. A subnet is an IP address block in the VPC. A VPC network segment may be divided into several blocks. Subnet division can help the tenant properly plan IP address resources. The tenant may further deploy resources, including a VM, a container (container), a sandbox (sandbox), and the like, in the subnets to provide a cloud service for the tenant. For another example, the tenant may further set security protection policies such as a security group and a network ACL in the VPC. The security group can provide access policies for instances such as cloud servers, cloud containers, and cloud databases that have same security protection requirements and are mutually trusted in the VPC. The network ACL controls inbound and outbound data flows of the subnets through a plurality of inbound and outbound rules associated with the subnets. For another example, the tenant may further customize a routing table to provide a basis for forwarding a data flow in the VPC. In addition, the VPC supports resource migration. VM migration is used as an example. The VM migration means to migrate a VM from one host machine to another host machine. However, services cannot be interrupted during a migration process. To achieve this, it should be ensured that parameters such as an internet protocol (Internet protocol, IP) address and a media access control (media access control, MAC) address of the VM remain unchanged before and after the VM migration.

Because of the functions of the VPC, more tenants choose to deploy resources (including computing resources, storage resources, and network resources) required by services on the VPC. In addition, to improve service security and timeliness, the tenant may alternatively deploy resources required by services on a plurality of VPCs in a distributed manner.

During actual application, the plurality of VPCs created by the tenant may need to communicate with each other. For example, a multinational enterprise has branches and services distributed in a plurality of regions. Therefore, the enterprise usually deploys VPCs in the plurality of regions and expects that these VPCs can communicate with each other. For another example, when a service group targeted by a specific enterprise is located in a region A, the enterprise deploys a corresponding VPC in the region A to provide a cloud service for the service group. When the service group targeted by the enterprise migrates from the region A to a region B, to reduce costs, the enterprise expects to directly migrate a resource in the VPC deployed in the region A to a VPC deployed in the region B.

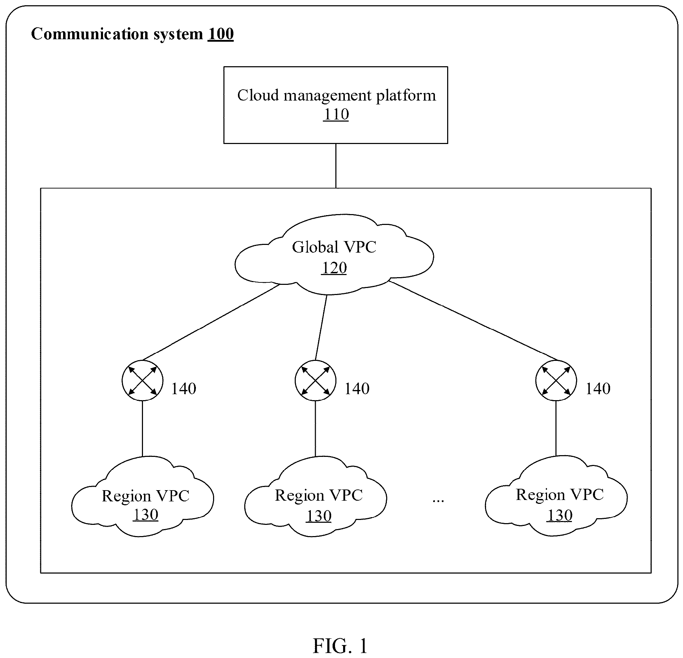

To resolve the foregoing problem, embodiments of this application provide a communication system. For example, FIG. 1 is a diagram of a structure of the communication system. As shown in FIG. 1, a communication system 100 includes a cloud management platform 110, a global VPC (global VPC) 120, a plurality of region VPCs (region VPCs) 130, and a plurality of access points 140. The following briefly describes parts of the communication system 100.

The cloud management platform 110 is configured to confirm configuration information entered or selected by a tenant, and is also configured to create the global VPC 120 and the plurality of region VPCs 130 based on the configuration information. It should be noted that, although both the global VPC 120 and the region VPC 130 are VPCs, functions of the global VPC 120 and the region VPC 130 are different. The global VPC 120 is configured to allocate network prefixes to the region VPCs 130 and subnets in the region VPCs 130, and different region VPCs 130 may communicate with each other through the global VPC 120. The global VPC 120 further has a network address management function, and can store and manage network prefixes of the plurality of region VPCs 130 and a network prefix of a subnet in each region VPC 130. The region VPC 130 is a VPC created by the tenant in a specified region based on a service requirement. The "region" means a set of basic resources (including computing resources, storage resources, and network resources), for example, a data center established by a cloud service provider. Therefore, the tenant may deploy a service in the region VPC 130, to execute the service by using the basic resources in the region VPC 130.

The cloud management platform 110 is further configured to allocate a network prefix to the global VPC 120, and allocate different network prefixes to the plurality of region VPCs 130 through the global VPC 120. A network prefix of each region VPC 130 includes the network prefix of the global VPC 120 and an identifier of the region VPC 130 (referred to as a region identifier), and region identifiers in network prefixes of different region VPCs 130 are different. In this way, it can be ensured that the network prefixes of the different region VPCs 130 are different, facilitating communication between the different region VPCs 130.

Optionally, the cloud management platform 110 is further configured to create the plurality of access points 140. The plurality of access points 140 may specifically include a gateway (gateway) (like a router or a switch), a gateway service (like a virtual machine or a server having a gateway function), and the like. The plurality of access points 140 are configured to establish communication connections between the global VPC 120 and the plurality of region VPCs 130 by using the network prefix of the global VPC 120 and the network prefixes of the plurality of region VPCs 130, to implement communication between the plurality of region VPCs 130.

Optionally, the cloud management platform 110 is further configured to configure an ACL on an access point 140, to perform security protection on a region VPC 130 connected to the access point 140. In some embodiments, the ACL includes at least one entry, and the access point 140 controls, by using the at least one entry, inbound and outbound data flows of the region VPC 130. For example, the plurality of region VPCs 130 include a first VPC, a second VPC, and a third VPC, and the plurality of access points 140 include a first access point, a second access point, and a third access point. The first VPC is connected to the global VPC 120 through the first access point, the second VPC is connected to the global VPC 120 through the second access point, and the third VPC is connected to the global VPC 120 through the third access point. In this case, the first VPC, the second VPC, and the third VPC may implement communication through the global VPC 120. During actual application, the tenant may expect that the first VPC and the second VPC can communicate with each other, and that the first VPC and the third VPC are isolated from each other. In this case, the cloud management platform 110 may configure an ACL on the first access point, where the ACL on the first access point includes an entry used to block communication between the first VPC and the third VPC. In this way, when the first access point receives a data flow from the third VPC or sends a data flow to the third VPC, the first access point may discard the data flow based on the local ACL, so that communication between the first VPC and the third VPC is blocked. Similarly, the cloud management platform 110 may alternatively configure an ACL on the third access point, where the ACL on the third access point includes an entry used to block communication between the first VPC and the third VPC. Then, when the third access point receives a data flow from the first VPC or sends a data flow to the first VPC, the third access point may discard the data flow based on the local ACL. In this way, communication between the first VPC and the third VPC can still be blocked.

Optionally, the cloud management platform 110 is further configured to indicate the global VPC 120 to allocate different network prefixes to subnets in the plurality of region VPCs 130. A network prefix of a subnet includes a network prefix of a region VPC 130 to which the subnet belongs and a subnet identifier, and the subnet identifier is used to identify the subnet. In other words, subnet identifiers in network prefixes of different subnets in a same region VPC 130 are different.

Optionally, the cloud management platform 110 is further configured to: deploy resources (including a VM, a container, a sandbox, and the like) in the subnets of the plurality of region VPCs 130, and allocate network prefixes to the resources. A network prefix of a resource includes a region identifier, and the region identifier in the network prefix of the resource indicates whether the resource supports migration from a region VPC to which the resource belongs to another region VPC. In this way, the cloud management platform 110 may determine, based on the network prefix of the resource, whether the resource can be migrated from the region VPC to which the resource belongs to the another region VPC.

Optionally, the cloud management platform 110 is further configured to allocate a bandwidth to the global VPC 120, so that a data flow passing through the global VPC 120 is within an allocated bandwidth range. In this way, a bandwidth for communication between the region VPCs 130 can be ensured.

Because the cloud management platform 110 has the functions, communication between different VPCs in the plurality of region VPCs 130 is implemented. In addition, according to the apparatus, automatic management of network addresses of the plurality of region VPCs 130 can be further implemented, and resources can be migrated between the different VPCs based on actual service requirements. In addition, a bandwidth for communication between VPCs can be ensured, to provide the tenant with a higher-quality cloud service.

In embodiments of this application, the functions of the cloud management platform 110 may be implemented by a software apparatus, or may be implemented by a hardware device, or may be implemented by a combination of a software apparatus and a hardware device.

The cloud management platform 110 is flexibly deployed, and may be deployed in a cloud environment. The cloud environment is an entity that provides a cloud service for a tenant by using a basic resource in a cloud computing mode. The cloud environment includes a cloud data center, the cloud data center includes a large quantity of basic resources (including computing resources, storage resources, and network resources) owned by a cloud service provider, and the computing resources included in the cloud data center may include a large quantity of computing devices (such as servers). Therefore, the cloud management platform 110 may be one or more servers in the cloud data center, or may be a software apparatus deployed on a server or a virtual machine in the cloud data center. The software apparatus may be deployed on a plurality of servers in a distributed manner, or deployed on a plurality of VMs in a distributed manner, or deployed on servers and VMs in a distributed manner.

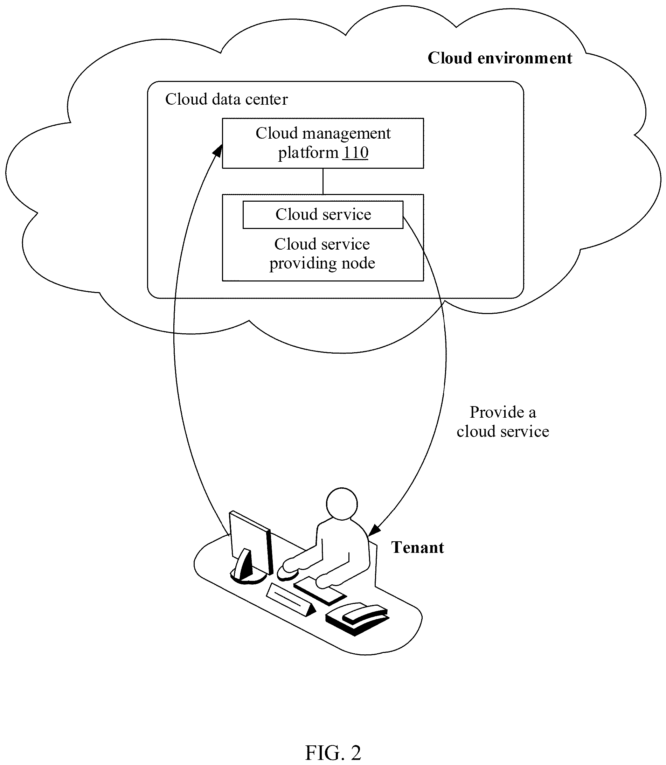

As shown in FIG. 2, the cloud management platform 110 is deployed in the cloud data center by the cloud service provider, and the cloud service provider provides a function provided by the cloud management platform 110 as a cloud service for the tenant. When using the cloud service, the tenant may register an account on the cloud management platform 110, log in to the cloud management platform 110 through the account, and send related configuration information to the cloud management platform 110. Then, the cloud management platform 110 provides the corresponding cloud service for the tenant through a cloud service providing node (including a plurality of basic resources in the cloud data center).

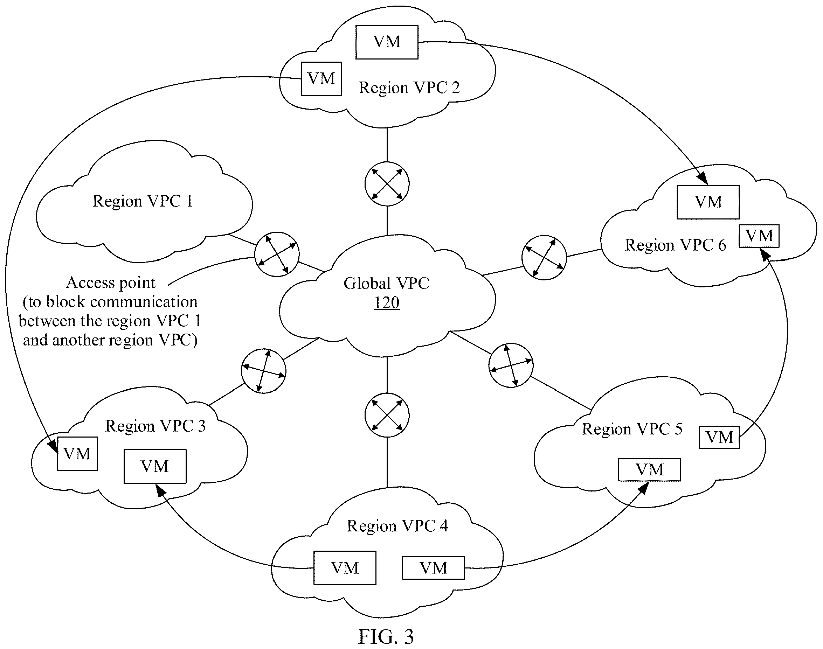

For example, as shown in FIG. 3, after logging in to the cloud management platform 110, the tenant sends configuration information to the cloud management platform 110, where the configuration information includes related information (for example, a deployment region) for deploying the global VPC 120 and the region VPCs 130 (including a region VPC 1 to a region VPC 6). Therefore, the cloud management platform 110 creates the global VPC 120 in a region 0, creates the region VPC 1 in a region 1, creates a region VPC 2 in a region 2, creates a region VPC 3 in a region 3, creates a region VPC 4 in a region 4, creates a region VPC 5 in a region 5, and creates a region VPC 6 in a region 6. The region 1, the region 2, and the region 3 are edge regions, the region 4 and the region 5 are central regions, and the region 6 is a resource region. An edge region is a region that is close to a user terminal and that has few basic resources (including computing resources, storage resources, and network resources). A central region is a region that is close to a region (for example, Beijing, Shanghai, and Guangzhou) with concentrated user terminals and that has rich basic resources. A resource region is a region (for example, a region in which a large data center is established) in which basic resources are rich. The cloud management platform 110 further allocates the network prefix to the global VPC 120, and allocates different network prefixes to the region VPC 1 to the region VPC 6 through the global VPC 120. The configuration information further includes that the region VPC 1 does not communicate with another region VPC. Therefore, the cloud management platform 110 configures an ACL on an access point connected to the region VPC 1, to block communication between the region VPC 1 and the another region VPC. The region VPC 2 to the region VPC 6 may communicate with each other through the global VPC 120.

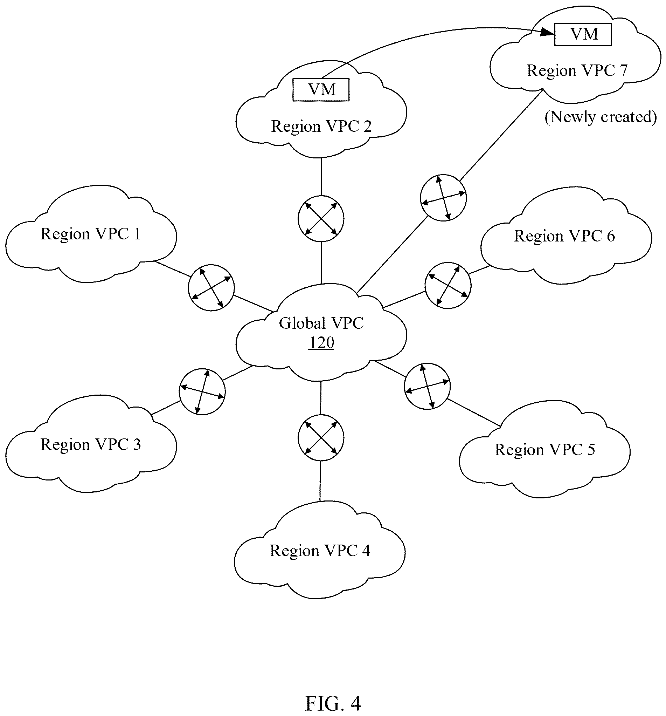

Further, the configuration information includes deploying subnets and VMs in the subnets in the region VPC 1 to the region VPC 6. Therefore, the cloud management platform 110 further deploys the subnets and the VMs in the subnets in the region VPC 1 to the region VPC 6, and allocates network prefixes to the subnets and the VMs in the subnets. Because the region VPC 2 to the region VPC 6 may communicate with each other across regions, VMs may be migrated between the region VPC 2 to the region VPC 6 based on service requirements. For example, VMs in the region VPC 2 may be migrated to the region VPC 6 or to the region VPC 3, VMs in the region VPC 4 may be migrated to the region VPC 3 or to the region VPC 5, and VMs in the region VPC 5 may be migrated to the region VPC 6. In other words, a service of the tenant may be migrated between edge regions, central regions, and resource regions, or may be migrated between edge regions, between central regions, or between resource regions. In this way, flexibility of service deployment can be improved, and requirements of the tenant on performance, costs, and capacity can be improved. For example, when a region VPC has excessive loads or an insufficient capacity, the cloud management platform 110 may migrate a part of services running on the region VPC to another region VPC. For another example, when a service requirement of the tenant changes, that is, when the tenant expects to create a new region VPC (a region VPC 7) and run, on the region VPC 7, a service on the region VPC 2, as shown in FIG. 4, after the cloud management platform creates the region VPC 7, the cloud management platform 110 may directly migrate the service running on the region VPC 2 to the region VPC 7.

In addition, the cloud management platform 110 may further allocate a bandwidth to the global VPC 120, to ensure that a data flow passing through the global VPC 120 is always within an appropriate bandwidth range. It should be understood that, because the region VPC 2 to the region VPC 6 need to communicate with each other through the global VPC 120, a bandwidth for communication between region VPCs can be ensured with a bandwidth of the data flow passing through the global VPC 120 ensured, to reduce difficulty of communication (including resource migration) between the region VPCs.

During specific implementation, in an embodiment, the cloud service provided by the cloud management platform 110 for the tenant may be divided into two parts: a VPC service and a cross-region VPC communication service. The VPC service indicates that the tenant can deploy a region VPC 130 (for example, the region VPC 1 to the region VPC 6) on a cloud, and this service may be provided for the tenant for free. The cross-region VPC communication service indicates a communication service between region VPCs 130 in different regions, and this service may be provided for the tenant for free, or may be provided for the tenant after the tenant purchases the service (by year or month, or in a manner of topping up in advance and then performing settlement based on final resource usage).

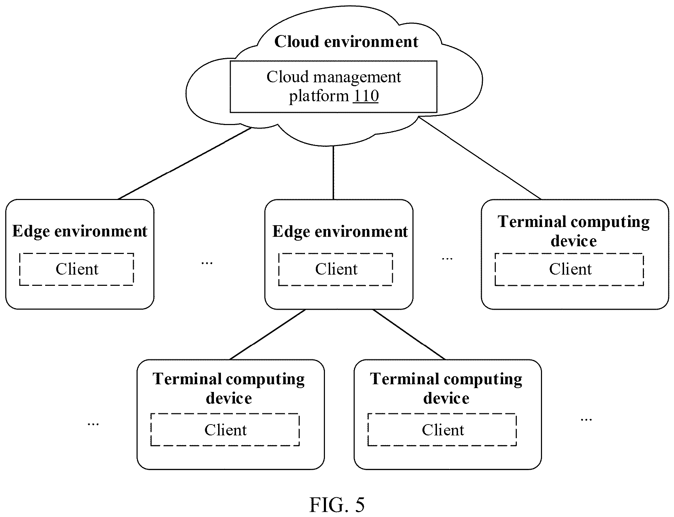

As shown in FIG. 5, when the cloud management platform 110 is set up in a cloud environment, clients that can communicate with the cloud management platform 110 may be deployed in edge environments, for example, applications that are provided by a cloud service provider and that can communicate with the cloud management platform 110; or may be deployed on terminal computing devices, for example, browsers, to receive configuration information entered by a tenant; or may be partially deployed in edge environments, and partially deployed on terminal computing devices. An edge environment is an environment that includes a set of edge computing devices that are close to a terminal computing device. The edge computing device includes an edge server, an edge station with computing power, and the like. The terminal computing device includes a terminal server, a smartphone, a notebook computer, a tablet computer, a personal desktop computer, a smart camera, and the like.

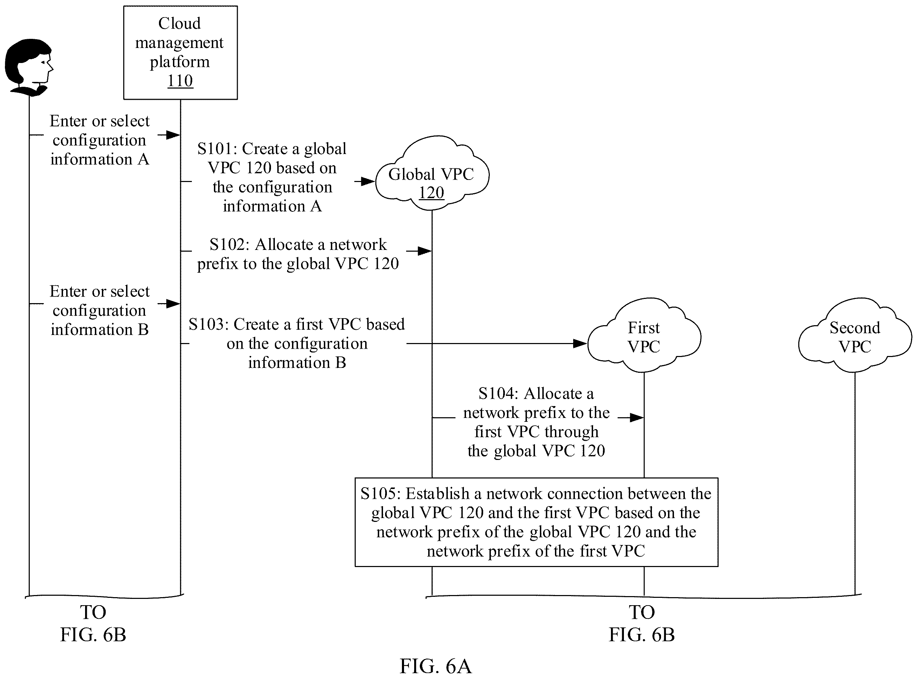

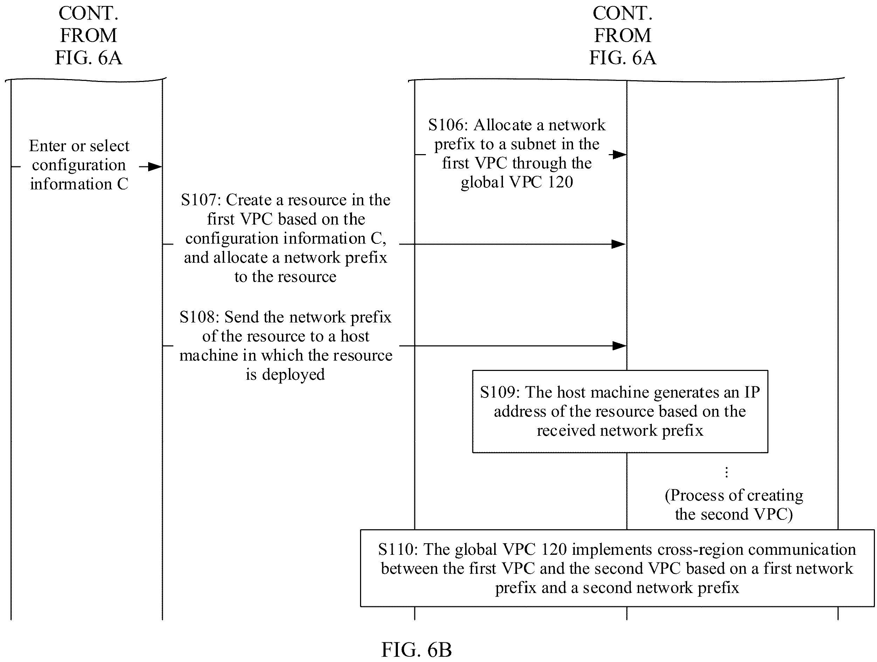

With reference to a method for communication between VPCs described in FIG. 6A and FIG. 6B, the following further describes how the cloud management platform 110 implements communication between different region VPCs 130. It should be noted that, for convenience, communication between a first VPC and a second VPC in a plurality of region VPCs 130 is used as an example for description herein.

S101: The cloud management platform 110 determines configuration information A entered or selected by a tenant, and creates a global VPC 120 based on the configuration information A.

Specifically, the cloud management platform 110 provides a user interface (user interface, UI) or an application programming interface (application programming interface, API), and the tenant sends the configuration information A to the cloud management platform 110 by performing an operation (including entering or selection) on the UI or the API. After determining the configuration information A, the cloud management platform 110 creates the global VPC 120 based on the configuration information A.

Optionally, the configuration information A includes bandwidth information of the global VPC 120, and may specifically include at least one of a maximum bandwidth and a minimum bandwidth, to ensure that a data flow passing through the global VPC 120 meets at least one of the following conditions: A bandwidth is less than or equal to the maximum bandwidth, and a bandwidth is greater than or equal to the minimum bandwidth. In addition, the configuration information A may further include information such as a location and a name of the global VPC 120.

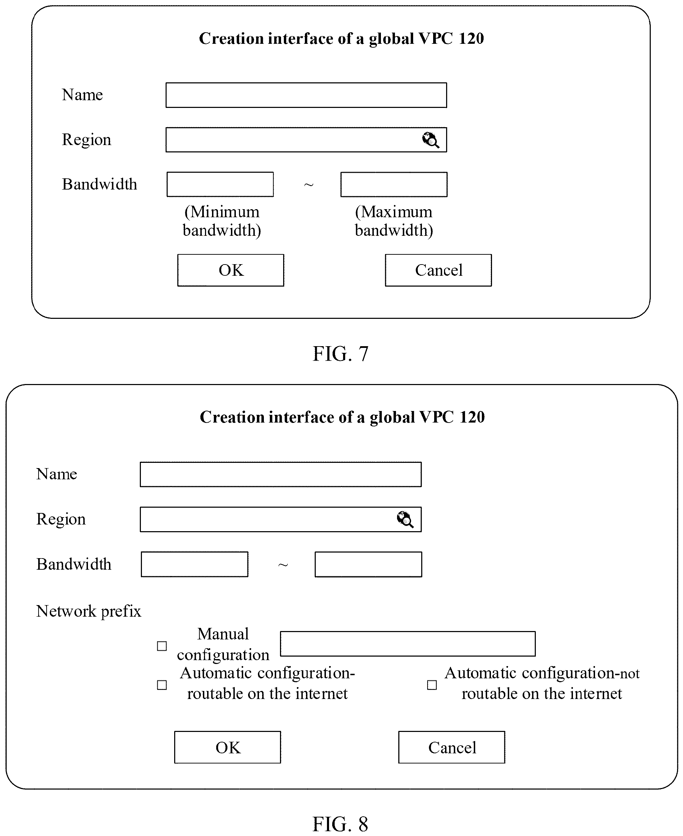

For example, FIG. 7 shows a UI used to create the global VPC 120. As shown in FIG. 7, the interface includes a plurality of options such as "Name", "Region", and "Bandwidth". The tenant fills the name of the global VPC 120 after the "Name" option based on a prompt on the interface, selects, after the "Region" option, a geographical location at which the global VPC 120 is deployed, and selects a minimum bandwidth and a maximum bandwidth after the "Bandwidth" option. Then, if the tenant taps an "OK" option, the cloud management platform 110 may receive the configuration information A, and create the global VPC 120 based on the configuration information A. If the tenant taps a "Cancel" option, the cloud management platform 110 does not receive the configuration information A, and does not create the global VPC 120.

S102: The cloud management platform 110 allocates a network prefix to the global VPC 120.

The network prefix of the global VPC 120 may be an IPv4 network prefix, or may be an IPv6 network prefix. The following describes S102 by using an example in which the network prefix of the global VPC 120 is an IPv6 network prefix. Specifically, the cloud management platform 110 may allocate the network prefix to the global VPC 120 in any one of the following manners:
Manner 1: The configuration information A may further include the network prefix of the global VPC 120. Therefore, the network prefix of the global VPC 120 may alternatively be specified by the tenant, for example, may be a global routing prefix applied for by the tenant from an IPv6 address management organization. During specific implementation, after receiving the configuration information A, the cloud management platform 110 obtains, based on the configuration information A, the network prefix specified by the tenant for the global VPC 120, and uses the network prefix specified by the tenant as the network prefix of the global VPC 120.
Manner 2: The cloud management platform 110 applies for a global routing prefix (global routing prefix) from an IPv6 address management organization, and then uses the applied global routing prefix as the network prefix of the global VPC 120.
   It should be noted that, generally, the global routing prefix applied for by the tenant from the IPv6 address management organization can be used only by the tenant, but the global routing prefix applied for by the cloud management platform 110 (namely, a cloud service provider) from the IPv6 address management organization may be provided for only one tenant, or may be provided for a plurality of tenants to save address resources. When the global routing prefix applied for by the cloud management platform 110 from the IPv6 address management organization needs to be provided for the plurality of tenants for use, to distinguish different tenants, the cloud management platform 110 may add a tenant identifier to the network prefix of the global VPC 120. Specifically, the cloud management platform 110 may allocate the network prefix to the global VPC 120 in Manner 3.
Manner 3: The cloud management platform 110 applies for a global routing prefix from the IPv6 address management organization, and then generates the network prefix of the global VPC 120 based on the applied global routing prefix and the tenant identifier. Optionally, the network prefix of the global VPC 120 includes the global routing prefix and the tenant identifier.
   The tenant identifier may be an ID of a tenant, or information with which a tenant can be identified, such as a number specified by the cloud management platform 110 for the tenant. This is not limited in embodiments of this application.
Manner 4: The cloud management platform 110 randomly generates a network prefix, and uses the randomly generated network prefix as the network prefix of the global VPC 120.

It should be noted that, generally the global routing prefix applied for by the cloud management platform 110 or the tenant from the IPv6 address management organization can be directly routed on the Internet, but the network prefix randomly generated by the cloud management platform 110 cannot be directly routed on the Internet. In other words, in comparison with Manner 1 to Manner 3, if the cloud management platform 110 allocates the network prefix to the global VPC 120 in the manner 4, when the global VPC 120 or a region VPC 130 needs to access the Internet, a network address translation (network address translation, NAT) gateway further needs to be additionally deployed. Therefore, during actual application, the cloud management platform 110 may select an appropriate manner based on a service requirement of the tenant to allocate the network prefix to the global VPC 120. For example, when the global VPC 120 or a region VPC 130 needs to access the Internet, the cloud management platform 110 may allocate the network prefix to the global VPC 120 in any one of Manner 1 to Manner 3. On the contrary, when neither the global VPC 120 nor the plurality of region VPCs 130 need to access the Internet, the cloud management platform 110 may allocate the network prefix to the global VPC 120 in Manner 4.

In a possible implementation, the UI or the API that is provided by the cloud management platform 110 and that is used to create the global VPC 120 includes configuration information of the network prefix of the global VPC 120, and the configuration information indicates the cloud management platform 110 to allocate the network prefix to the global VPC 120 in an appropriate manner. For example, FIG. 8 shows another UI for creating a global VPC. In comparison with the interface shown in FIG. 7, a "Network prefix" option is added to the interface shown in FIG. 8. The option has three configuration manners: "Automatic configuration-routable on the Internet", "Automatic configuration-not routable on the Internet", and "Manual configuration". When the tenant selects the "Automatic configuration-routable on the Internet" option, the cloud management platform 110 allocates the network prefix to the global VPC 120 in Manner 2 or Manner 4. When the tenant selects the "Automatic configuration-not routable on the Internet" option, the cloud management platform 110 allocates the network prefix to the global VPC 120 in Manner 4. When the tenant selects the "Manual configuration" option, the tenant further needs to fill the network prefix in a box after the option. In this way, the cloud management platform 110 may allocate the network prefix to the global VPC 120 in Manner 1.

It should be understood that, when the network prefix of the global VPC 120 is a network prefix in an IPv4 address, a manner in which the cloud management platform 110 allocates the network prefix to the global VPC 120 is similar to Manner 1 to Manner 4. For brevity, details are not described herein again.

S103: The cloud management platform 110 determines configuration information B entered or selected by the tenant, and creates a first VPC based on the configuration information B.

Specifically, the tenant sends the configuration information B to the cloud management platform 110 by performing an operation (including entering or selection) on a UI or an API provided by the cloud management platform 110. After determining the configuration information B, the cloud management platform 110 creates the first VPC based on the configuration information B.

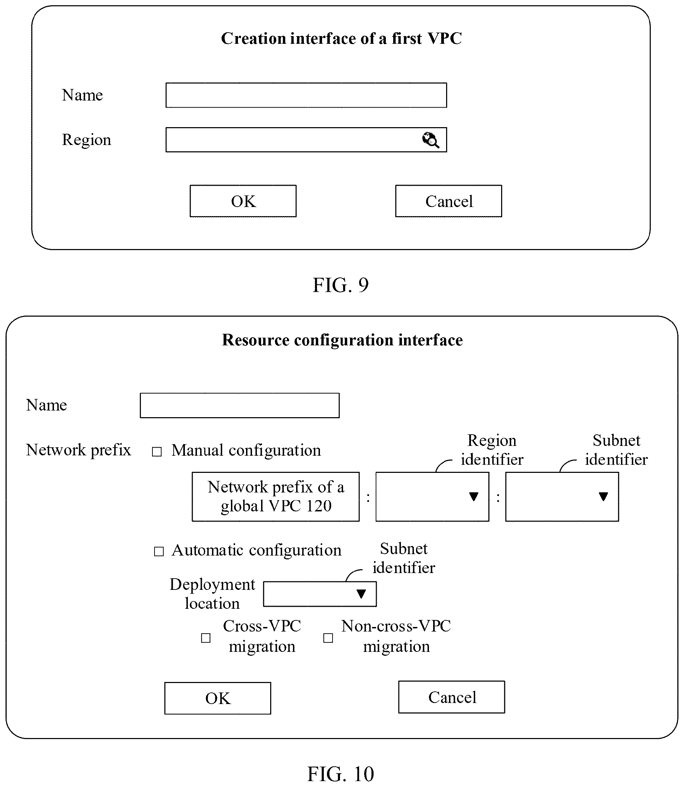

Optionally, the configuration information B includes information such as a location and a name of the first VPC. For example, FIG. 9 shows a UI used to create a region VPC 130. As shown in FIG. 9, the interface includes a plurality of options such as "Name" and "Region". As prompted by the interface, the tenant enters a name of the first VPC after the "Name" option and selects, after the "Region" option, a geographical location for deploying the first VPC. It should be understood that, during actual application, the tenant may select an appropriate region based on a service requirement to deploy the first VPC. In this way, a network delay can be reduced, an access speed can be increased, and cloud service quality can be improved. Then, if the tenant taps an "OK" option, the cloud management platform 110 may receive the configuration information B, and create the first VPC based on the configuration information B; if the tenant taps a "Cancel" option, the cloud management platform 110 may return to a previous-level menu (the UI for creating the global VPC 120 shown in FIG. 7 or FIG. 8), and in this way, the cloud management platform 110 does not receive the configuration information B, and does not create the first VPC.

S104: The cloud management platform 110 allocates a network prefix to the first VPC through the global VPC 120.

The network prefix of the first VPC includes a network prefix of the global VPC 120 and an identifier of the first VPC (referred to as a first region identifier). The first region identifier may be a number of the first VPC in the plurality of region VPCs 130, or an ID of the first VPC, or information with which the first VPC can be identified, such as an identifier of a geographical location of the first VPC. This is not limited in embodiments of this application.

Specifically, after creating the first VPC, the cloud management platform 110 generates the first region identifier. Then, the cloud management platform 110 sends a first configuration command to the global VPC 120, where the first configuration command includes the first region identifier. After receiving the first configuration command, the global VPC 120 obtains the first region identifier based on the first configuration command, and then generates the network prefix of the first VPC based on the first region identifier and the network prefix of the global VPC 120. Finally, the cloud management platform 110 obtains the network prefix of the first VPC from the global VPC 120, and allocates the obtained network prefix to the first VPC.

Optionally, the network prefix of the first VPC further includes the tenant identifier described above, and the foregoing first configuration command may also include the foregoing tenant identifier.

Optionally, after generating the network prefix of the first VPC, the global VPC 120 stores the network prefix of the first VPC.

S105: The cloud management platform 110 establishes a network connection between the global VPC 120 and the first VPC based on the network prefix of the global VPC 120 and the network prefix of the first VPC.

Specifically, the cloud management platform 110 creates a first access point, where the first access point may be a gateway (for example, a router or a switch) or a gateway service (for example, a virtual machine or a server having a gateway function). Then, the cloud management platform 110 configures, on the first access point, a routing relationship between the network prefix of the global VPC 120 and the network prefix of the first VPC. In this way, the global VPC 120 and the first VPC may be connected to each other based on the first access point.

In consideration of actual application, to protect security of service data on the first VPC, a service deployed on the first VPC needs to be isolated from a service on a third VPC, or a service deployed on the first VPC does not support access of one or some services on the third VPC. Therefore, optionally, the cloud management platform 110 may further perform the following steps: configuring an ACL on the first access point, where the ACL includes at least one of the following entries: rejecting a data flow from one or more services on the third VPC, and rejecting a data flow sent to one or more services on the third VPC. The foregoing entry "rejecting a data flow from one or more services on the third VPC" indicates the first access point to discard the data flow when receiving the data flow from the one or more services on the foregoing third VPC, so that the deployed service on the first VPC is not accessed by the one or more services on the foregoing third VPC; and the foregoing entry "rejecting a data flow sent to one or more services on the third VPC" indicates the first access point to discard the data flow when receiving the data flow sent by the first VPC to the one or more services on the third VPC. In this way, the service on the first VPC cannot access one or some services on the third VPC.

It should be understood that, when the ACL on the first access point includes rejecting a data flow from any service on the third VPC and rejecting a data flow sent to any service on the third VPC, the first VPC and the third VPC are isolated from each other, that is, cannot communicate with each other.

S106: The cloud management platform 110 allocates a network prefix to a subnet in the first VPC through the global VPC 120.

The first VPC includes at least one subnet. A quantity of subnets in the first VPC may be preset by the tenant. For example, the configuration information B includes a quantity of subnets that need to be deployed in the first VPC. The quantity of subnets in the first VPC may alternatively be dynamically adjusted by the cloud management platform 110 based on an actual situation. The quantity of subnets in the first VPC (for example, 256) may alternatively be preset by a cloud service provider. This is not limited in embodiments of this application. A network prefix of each subnet includes the network prefix of the first VPC and a subnet identifier. The subnet identifier may be a number set by the cloud management platform 110 or the tenant for the subnet, or information with which the subnet can be identified, such as a subnet ID. Optionally, the network prefix of each subnet may further include the tenant identifier described above.

In some embodiments, one subnet (a first subnet) in the first VPC is used as an example, that the cloud management platform 110 allocates a network prefix to a subnet in the first VPC through the global VPC 120 includes: The cloud management platform 110 sends a second configuration command to the global VPC 120, where the second configuration command includes an identifier of the first subnet (referred to as a first subnet identifier). After receiving the foregoing second configuration command, the global VPC 120 obtains the first subnet identifier based on the second configuration command, and then generates a network prefix of the first subnet based on the first subnet identifier and the locally stored network prefix of the first VPC. Finally, the cloud management platform 110 obtains the network prefix of the first subnet from the global VPC 120, and allocates the obtained network prefix to the first subnet.

Optionally, after generating a network prefix of a subnet in the first VPC, the global VPC 120 stores the network prefix of the subnet in the first VPC.

S107: The cloud management platform 110 determines configuration information C entered or selected by the tenant, creates a resource in the first VPC based on the configuration information C, and allocates a network prefix to the resource.

The resource created by the cloud management platform 110 in the first VPC may include a plurality of types such as a VM, a container, and a sandbox. The configuration information C includes a deployment location of the resource, namely, a subnet in which the resource is deployed in the first VPC. Further, the deployment location of the resource may be specifically a host machine in the subnet. The configuration information C further includes representation information of a resource migration attribute, where the information indicates whether the resource supports migration from the first VPC to a VPC managed by the global VPC 120 and capable of communicating with the first VPC, where the VPC managed by the global VPC 120 means a VPC to which a network prefix is allocated by the global VPC 120, including the plurality of region VPCs 130, and the VPC managed by the global VPC 120 and capable of communicating with the first VPC means a VPC, for example, the second VPC, to which a network prefix is allocated by the global VPC 120 and that is capable of communicating with the first VPC through the global VPC 120. In addition, the configuration information C may further include a type of the resource (for example, a VM, a container, or a sandbox), a memory size of the resource, an operating system of the resource, and the like.

The network prefix of the resource includes the network prefix of the global VPC 120, a region identifier, and a subnet identifier. Optionally, the network prefix of the resource may further include the tenant identifier described above. The region identifier in the network prefix of the resource has a different function from the region identifier in the network prefix of the first VPC described in S104 and the region identifier in the network prefix of the subnet in the first VPC described in S106. The region identifier in the network prefix of the resource indicates whether the resource supports migration from the first VPC to the VPC managed by the global VPC 120 and capable of communicating with the first VPC. The subnet identifier in the network prefix of the resource is used to identify a subnet in which the resource is deployed, that is, the subnet identifier in the network prefix of the resource is the same as the subnet identifier in the network prefix of the subnet in which the resource is deployed.

Optionally, the representation information of the resource migration attribute includes the region identifier in the network prefix of the resource. Specifically, when the resource supports migration from the first VPC to the VPC managed by the global VPC 120 and capable of communicating with the first VPC, the region identifier in the network prefix of the resource is different from a region identifier in a network prefix of any VPC managed by the global VPC 120. For example, it is assumed that region identifiers in network prefixes of the plurality of region VPCs 130 are respectively 1 to N (N is a positive integer greater than 0). The region identifier in the network prefix of the resource may be any number (for example, 0) different from 1 to N. When the resource does not support migration from the first VPC to the VPC managed by the global VPC 120 and capable of communicating with the first VPC, the region identifier in the network prefix of the resource may be the first region identifier. It should be understood that, in addition to the region identifier, the representation information of the resource migration attribute may further include other types of information, for example, "Cross-VPC migration" and "Non-cross-VPC migration" options shown in FIG. 10.

In some embodiments, the tenant may send the configuration information C to the cloud management platform 110 by performing an operation (including entering or selection) on a UI or an API provided by the cloud management platform 110. FIG. 10 shows an example of a UI used to create a resource. As shown in FIG. 10, the interface includes a plurality of options such as a "Name" and a "Network prefix". The tenant can enter a name of a resource in a text box after the "Name" option. The "Network prefix" option has two configuration manners, namely, "Manual configuration" and "Automatic configuration". When the tenant selects the "Manual configuration", the tenant may enter a region identifier and a subnet identifier in corresponding address bars, where the tenant may select an appropriate region identifier based on a service requirement. For example, when the VM needs to be migrated from the first VPC to another VPC, the tenant may select 0 as the region identifier, and when the VM only needs to be migrated in the first VPC, the tenant may select the first region identifier as the region identifier. The tenant may further select, based on the service requirement, an appropriate subnet identifier, namely, an identifier of a subnet in which the VM needs to be deployed. When the tenant selects the "Automatic configuration", the tenant needs to select an identifier of a subnet in which the VM needs to be deployed in a selection box after a "Deployment location" option. In addition, if the VM needs to be migrated from the first VPC to another VPC, the tenant may select the "Cross-VPC migration" option; or if the VM does not need to be migrated from the first VPC to another VPC, the tenant may select the "Non-cross-VPC migration" option. Then, if the tenant taps an "OK" option, the cloud management platform 110 may receive the configuration information C; or if the tenant taps a "Cancel" option, the cloud management platform 110 may return to a previous-level menu (the UI for creating the first VPC shown in FIG. 9), and in this way, the cloud management platform 110 does not receive the configuration information C.

In some embodiments, that the cloud management platform 110 allocates a network prefix to the foregoing created resource includes: The cloud management platform 110 obtains the deployment location of the resource and the representation information of the resource migration attribute based on the configuration information C entered or selected by the tenant. When the representation information of the resource migration attribute indicates that the resource supports migration from the first VPC to the VPC managed by the global VPC 120 and capable of communicating with the first VPC, the cloud management platform 110 allocates the network prefix to the resource through the global VPC 120; or when the representation information of the resource migration attribute indicates that the resource does not support migration from the first VPC to the VPC managed by the global VPC 120 and capable of communicating with the first VPC, the cloud management platform 110 allocates the network prefix to the resource through the first VPC.

Further, a specific process in which the cloud management platform 110 allocates the network prefix to the resource through the global VPC 120 is as follows: The cloud management platform 110 sends a third configuration command to the global VPC 120, where the third configuration command includes the deployment location of the resource. After receiving the third configuration command, the global VPC 120 determines the subnet identifier in the network prefix of the resource based on the third configuration command, generates a region identifier different from a network prefix of any VPC managed by the global VPC 120, and generates the network prefix of the resource in combination with the locally stored network prefix of the global VPC. Finally, the cloud management platform 110 obtains the network prefix of the resource from the global VPC 120, and allocates the obtained network prefix to the resource.

A specific process in which the cloud management platform 110 allocates the network prefix to the resource through the first VPC is as follows: The cloud management platform 110 sends a third configuration command to the first VPC, where the third configuration command includes the deployment location of the resource. After receiving the third configuration command, the first VPC determines the subnet identifier in the network prefix of the resource based on the third configuration command, and generates the network prefix of the resource in combination with the locally stored network prefix of the first VPC. Finally, the cloud management platform 110 obtains the network prefix of the resource from the first VPC, and allocates the obtained network prefix to the resource.

In some other embodiments, that the cloud management platform 110 allocates a network prefix to the created resource includes: The cloud management platform 110 allocates the network prefix to the created resource through the global VPC 120. Specifically, the cloud management platform 110 obtains the deployment location of the resource and the representation information of the resource migration attribute based on the configuration information C entered or selected by the tenant, and then sends a third configuration command to the global VPC 120, where the third configuration command includes the deployment location of the resource and the representation information of the resource migration attribute. After receiving the third configuration command, the global VPC 120 determines, based on the deployment location of the resource, the subnet identifier in the network prefix of the resource, and determines, based on the representation information of the resource migration attribute, whether the resource supports migration from the first VPC to the VPC managed by the global VPC 120 and capable of communicating with the first VPC. When the representation information of the resource migration attribute indicates that the resource supports migration from the first VPC to the VPC managed by the global VPC 120 and capable of communicating with the first VPC, the global VPC 120 generates a region identifier different from a network prefix of any VPC managed by the global VPC 120. When the representation information of the resource migration attribute indicates that the resource does not support migration from the first VPC to the VPC managed by the global VPC 120 and capable of communicating with the first VPC, the global VPC 120 determines the first region identifier. Then, the global VPC 120 generates the network prefix of the resource based on the locally stored network prefix of the global VPC and the determined subnet identifier and region identifier. Finally, the cloud management platform 110 obtains the network prefix of the resource from the global VPC 120, and allocates the obtained network prefix to the resource.

S108: The cloud management platform 110 sends the network prefix of the resource to a host machine in which the resource is deployed.

S109: After receiving the network prefix of the resource, the host machine generates an IP address of the resource based on the network prefix of the resource.

The IP address of the resource may be an IPv4 address or an IPv6 address. The following describes a process in which the host machine generates the IP address of the resource based on the network prefix of the resource by using an example in which the IP address of the resource is the IPv6 address.

First, it should be noted that a length of the IPv6 address is 128 bits (bit). The IPv6 address includes two parts. One part is a network prefix, and the other part is an interface identifier (interface ID). Lengths of the two parts are both 64 bits. Therefore, when the IP address of the resource is the IPv6 address, the address includes the 64-bit network prefix and the 64-bit interface identifier, where the network prefix in the address includes the network prefix allocated by the cloud management platform 110 to the resource, and the interface identifier in the address includes a MAC address of an interface of the host machine. It should be noted that different resources deployed in the host machine correspond to different interfaces of the host machine. In other words, interface identifiers in IPv6 addresses of different resources deployed in the same host machine are different. Therefore, that the host machine generates an IP address of the resource based on the network prefix of the resource includes: The host machine generates the interface identifier based on the MAC address of the interface corresponding to the resource, and then generates the IP address (namely, the IPv6 address) of the resource based on the network prefix of the resource and the interface identifier.

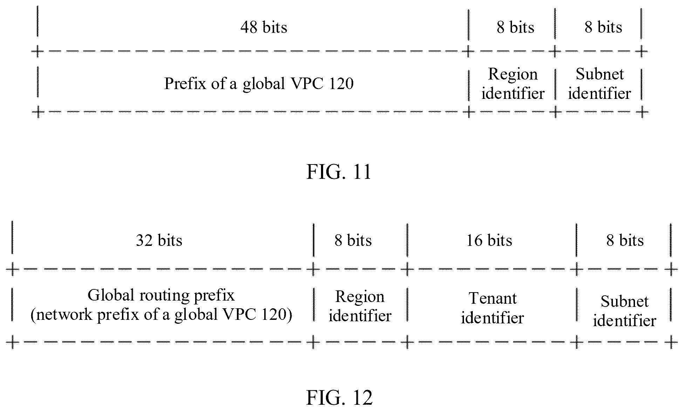

In some embodiments, the network prefix (namely, the network prefix of the resource) allocated by the cloud management platform 110 to the resource has 64 bits. It can be learned from the foregoing that the network prefix of the resource may include the network prefix of the global VPC 120, the region identifier, and the subnet identifier, and may further include the tenant identifier. Therefore, the network prefix of the resource has a plurality of formats. FIG. 11 and FIG. 12 respectively show network prefixes of the resource in different formats.

As shown in FIG. 11, the network prefix of the resource includes the network prefix of the global VPC 120, the region identifier, and the subnet identifier, where the network prefix of the global VPC 120 has 48 bits, the region identifier has 8 bits, and the subnet identifier has 8 bits.

As shown in FIG. 12, the network prefix of the resource includes the network prefix of the global VPC 120, the region identifier, the tenant identifier, and the subnet identifier, where the network prefix of the global VPC 120 has 32 bits, the region identifier has 8 bits, the tenant identifier has 16 bits, and the subnet identifier has 8 bits.

It should be noted that, generally, the global routing prefix applied by the tenant from the IPv6 address management organization has 48 bits, but when the cloud management platform 110 applies for the global routing prefix from the IPv6 address management organization, the cloud management platform 110 may negotiate with the IPv6 address management organization, to apply for global routing prefixes of different lengths (for example, 20 bits, 32 bits, and 48 bits). Therefore, the 48-bit network prefix of the global VPC 120 shown in FIG. 11 may be applied by the tenant from the IPv6 address management organization, or applied for by the cloud management platform 110 from the IPv6 address management organization, or include the global routing prefix applied for by the cloud management platform 110 from the IPv6 address management organization and the tenant identifier, or may be randomly generated by the cloud management platform 110. The 32-bit network prefix of the global VPC 120 shown in FIG. 12 may be applied by the cloud management platform 110 from the IPv6 address management organization.

It should be further noted that a length of each part (including the network prefix of the global VPC 120, the region identifier, the subnet identifier, and the tenant identifier) in the network prefix of the resource may be flexibly set, and a location of each part may also be flexibly adjusted. For example, the tenant identifier may be located before the region identifier. This is not limited in embodiments of this application. During actual application, the cloud management platform 110 may allocate a proper network prefix to the resource based on configuration information (including the configuration information A, the configuration information B, and the configuration information C) entered or selected by the tenant.

It should be understood that when the IP address of the resource is the IPv4 address, a generation process of the IPv4 address is similar to the foregoing generation process of the IPv6 address of the resource. In addition, the IPv4 address of the resource also has a plurality of formats, and may be obtained by analogy with the IPv6 address of the resource. Therefore, for brevity, details are not described in embodiments of this application.

Creation of the first VPC and the resource in the first VPC may be implemented through the foregoing S101 to S109. Similarly, the cloud management platform 110 may further create the second VPC and a resource in the second VPC. For a specific process, refer to S101 to S109. For brevity, details are not described herein again.

S110: The global VPC 120 implements cross-region communication between the first VPC and the second VPC based on the first network prefix and the second network prefix.

It should be understood that, because the network connection is established between the first VPC and the global VPC through the first access point (the foregoing S105), a network connection is established between the second VPC and the global VPC through a second access point, and the network prefix of the first VPC is different from a network prefix of the second VPC, communication between the first VPC and the second VPC may be implemented through the global VPC 120.

In some embodiments, the global VPC 120 stores a routing relationship between the network prefix of the first VPC and the network prefix of the second VPC. For example, the global VPC 120 stores at least one of a first routing entry and a second routing entry. In the first routing entry, a source address is the network prefix of the first VPC, and a destination address is the network prefix of the second VPC; and in the second routing entry, a source address is the network prefix of the second VPC, and a destination address is the network prefix of the first VPC. Then, for example, the first VPC sends a data flow (for example, a data flow A) to the second VPC. That the global VPC 120 implements cross-region communication between the first VPC and the second VPC based on the first network prefix and the second network prefix includes: The global VPC 120 receives the data flow A sent by the first VPC through the first access point, and then sends the data flow A to the second VPC through the second access point based on the first routing entry. That is, a forwarding path of the data flow A is: the first VPC -> the first access point -> the global VPC 120 -> the second access point -> the second VPC.

To improve quality of communication between the first VPC and the second VPC, optionally, the cloud management platform 110 further performs the following step: Allocate a bandwidth to the global VPC 120, so that a data flow passing through the global VPC 120 meets a requirement of the bandwidth. The bandwidth may be preset by the tenant. For example, the configuration information A including the bandwidth information indicates that the cloud management platform 110 may allocate the bandwidth to the global VPC 120 based on the configuration information A. The bandwidth may also be dynamically adjusted by the cloud management platform 110 based on an actual situation. For example, the cloud management platform 110 adjusts the bandwidth based on a load status of the global VPC 120 and a current network status.

Further, the cloud management platform 110 may enable, in the following manner, the data flow passing through the global VPC 120 to meet the requirement of the bandwidth: The cloud management platform 110 maintains a mapping table, where the mapping table includes at least one VPC identifier, at least one flow label, and a correspondence between at least one VPC identifier and at least one flow label, where the at least one VPC identifier includes an identifier of the global VPC 120, and the at least one flow label includes a flow label (which is referred to as a target flow label below) corresponding to the identifier of the global VPC 120. In addition, the cloud management platform 110 may create a plurality of global VPCs based on a requirement of the tenant. Therefore, the at least one VPC identifier may further include an identifier of another global VPC. Correspondingly, the at least one flow label further includes a flow label corresponding to the identifier of the another global VPC. The identifier of the global VPC 120 may be preset by the tenant, or may be set by the cloud management platform 110. When the tenant creates only one global VPC 120, the identifier of the global VPC 120 may be a tenant identifier. When the tenant creates a plurality of global VPCs 120, the identifier of the global VPC 120 may be information that can be used to identify the global VPC 120, such as an ID of the global VPC 120 or a number of the global VPC 120. The target flow label is used to identify the data flow passing through the global VPC 120. During specific implementation, the cloud management platform 110 allocates the identifier to the global VPC 120, then attaches, based on the identifier of the global VPC 120, the corresponding flow label to the data flow passing through the global VPC 120, obtains the requirement of the bandwidth based on the flow label, and finally indicates forwarding of the data flow based on the requirement of the bandwidth.

For example, it is assumed that the first VPC sends the data flow A to the second VPC through the global VPC 120. When the global VPC 120 receives the data flow A, the cloud management platform 110 determines the target flow label based on the foregoing mapping table, encapsulates the data flow A by using the target flow label (for example, adds the target flow label to a flow label field in an IPv6 header of the data flow A, or adds the target flow label to a user-defined field in an IPv4 header of the data flow A), and then indicate the global VPC 120 to send the encapsulated data flow A to the second VPC. With the foregoing operations performed, when an underlay (underlay) network forwards the data flow A, the underlay network may obtain the target flow label, to determine the bandwidth allocated by the cloud management platform 110 to the global VPC 120, and then configure, based on the requirement of the bandwidth, a quality of service (quality of service, QoS) queue used to forward the data flow A, to complete forwarding of the data flow A. In this way, a bandwidth of the data flow A can be ensured, thereby ensuring quality of communication between the first VPC and the second VPC.

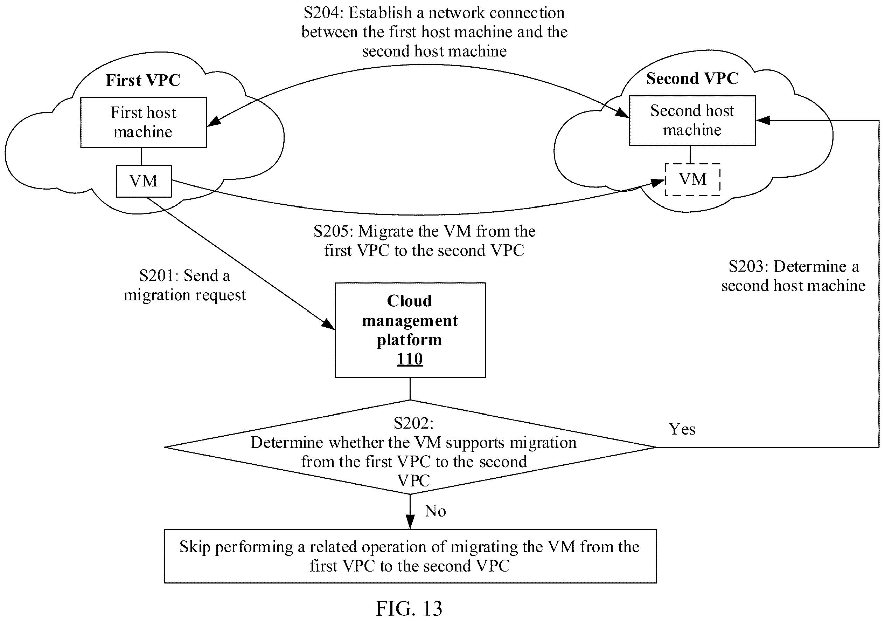

Based on the foregoing method provided in embodiments of this application, in addition to implementing communication between the first VPC and the second VPC, resources in the first VPC and the second VPC can be migrated on demand. The following describes the foregoing migration process with reference to FIG. 13 by using an example in which a VM in a first VPC is migrated to a second VPC.

S201: The VM in the first VPC sends a migration request to a cloud management platform 110.

The current VM is located on a first host machine, the first host machine is located on a first subnet in the first VPC, and the migration request includes an IP address of the VM, a MAC address of the VM, and an IP address of the first host machine.

S202: The cloud management platform 110 determines, based on the migration request, whether the VM supports migration from the first VPC to the second VPC. If the VM supports migration from the first VPC to the second VPC, S203 to S205 are performed; if the VM does not support migration from the first VPC to the second VPC, the cloud management platform 110 does not perform a related operation of migrating the VM from the first VPC to the second VPC.

Specifically, the cloud management platform 110 obtains a region identifier in the IP address of the VM based on the migration request, and then determines, based on the region identifier in the IP address of the VM, whether the VM supports migration from the first VPC to the second VPC. If the region identifier in the IP address of the VM is different from a region identifier in a network prefix of any region VPC 130, the cloud management platform 110 determines that the VM supports migration from the first VPC to the second VPC; and if the region identifier in the IP address of the VM is the same as a first region identifier, the cloud management platform 110 determines that the VM does not support migration from the first VPC to the second VPC.

S203: The cloud management platform 110 determines a second host machine based on the migration request.

Specifically, the cloud management platform 110 obtains a subnet identifier in the IP address of the VM based on the migration request, and then determines a second subnet based on the subnet identifier in the IP address of the VM, thereby determining the second host machine. The second host machine is located on the second subnet, the second subnet is a network segment in the second VPC, and a subnet identifier in a network prefix of the second subnet is the same as a subnet identifier in a network prefix of the first subnet.

S204: The cloud management platform 110 establishes a network connection between the first host machine and the second host machine.

Specifically, the cloud management platform 110 obtains the IP address of the first host machine based on the migration request, and then establishes the network connection between the first host machine and the second host machine based on the IP address of the first host machine and an IP address of the second host machine.

S205: The cloud management platform 110 migrates the VM from the first host machine to the second host machine.

Specifically, after the network connection between the first host machine and the second host machine is established, the cloud management platform 110 sends a migration instruction to the first host machine. After receiving the migration instruction, the first host machine first sends a configuration (for example, an operating system) and device information (for example, a memory size) of the VM to the second host machine, and then synchronizes a memory (such as an initial memory of the VM and a memory changed page) of the VM to the second host machine. Then, the VM is suspended on the first host machine, and a last memory alternating fragment is transferred to the second host machine. Finally, the VM is stopped on the first host machine, and the VM is recovered on the second host machine, to complete migration of the VM.

It should be noted that, in a VM migration process, another VM (for example, a VM deployed on the first VPC or another VPC) may access the VM. In this case, the cloud management platform 110 needs to send a data flow from the another VM to the first host machine. After the VM migration is completed, if another VM accesses the VM, the cloud management platform 110 needs to send a data flow from the another VM to the second host machine.

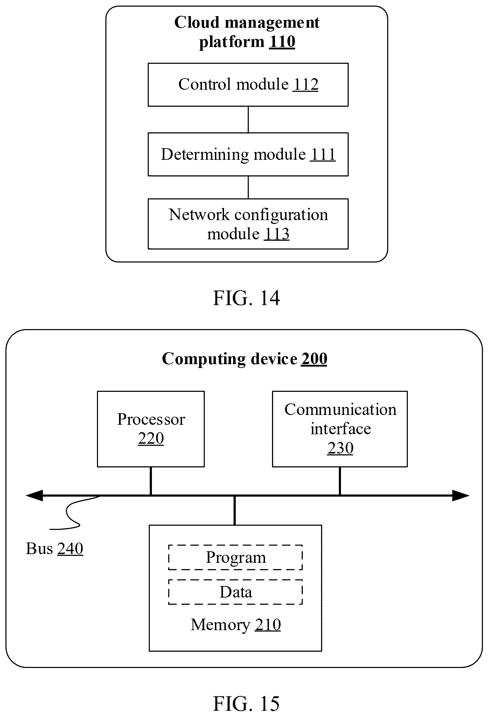

The foregoing describes functions of the cloud management platform 110 in detail with reference to the methods described in FIG. 6A to FIG. 13. The following describes the cloud management platform 110 in more detail with reference to FIG. 14 to FIG. 16 from a perspective of a structure of the cloud management platform 110.

For example, FIG. 14 is a diagram of a structure of a cloud management platform 110. As shown in FIG. 14, the cloud management platform 110 includes a determining module 111, a control module 112, and a network configuration module 113. The determining module 111, the control module 112, and the network configuration module 113 work together to implement steps performed by the cloud management platform 110 in the foregoing method embodiments. Specifically, the determining module 111 is configured to perform a step of determining configuration information A entered or selected by a tenant in S101, a step of determining configuration information B entered or selected by the tenant in S103, and a step of determining configuration information C entered or selected by the tenant in S107. The determining module 111 is further configured to send the configuration information A, the configuration information B, and the configuration information C to the control module 112. The control module 112 is configured to perform a step of creating a global VPC 120 based on the configuration information A in S101, a step of creating a first VPC based on the configuration information B in S103, and a step of creating a resource in the first VPC based on the configuration information C and allocating a network prefix to the resource in S107. The control module 112 is further configured to perform S102 to S104, S106, S108, and S110. The network configuration module 113 is configured to perform S105.

Optionally, the determining module 111 is further configured to receive a migration request sent by a VM, and send the migration request to the control module 112. The control module 112 is further configured to perform S202 to S205.

Optionally, the control module 112 is further configured to perform a related step of ensuring a bandwidth for communication between the first VPC and the second VPC, for example, allocating a bandwidth to the global VPC 120, and attaching a flow label to a data flow passing through the global VPC 120.

It should be understood that the diagram of the structure shown in FIG. 14 is only an example of structural division of the cloud management platform 110 based on functions. A specific division manner of the structure of the cloud management platform 110 is not limited in embodiments of this application. A person skilled in the art may properly divide internal functions of the cloud management platform 110 according to the solutions recorded in the method embodiments of this application. Therefore, internal function modules of the cloud management platform 110 can implement steps performed by the cloud management platform 110 as an execution body in the method embodiments. It should be further understood that each module in the cloud management platform 110 may be a software module, or may be a hardware module, or may be partially a software module and partially a hardware module.

FIG. 15 is a diagram of a structure of a computing device according to an embodiment of this application. The cloud management platform 110 may be deployed on the computing device. The computing device may be a computing device (for example, a server) in a cloud environment, a computing device in an edge environment, or a terminal computing device. As shown in FIG. 15, the computing device 200 includes a memory 210, a processor 220, a communication interface 230, and a bus 240. The memory 210, the processor 220, and the communication interface 230 implement communication connections to each other through the bus 240.

The memory 210 may include a read only memory (read only memory, ROM), a static storage device, a dynamic storage device, a random access memory (random access memory, RAM), a hard disk, or the like. The memory 210 may store a program, for example, a program in the determining module 111, a program in the control module 112, and a program in the network configuration module 113. When program code stored in the memory 210 is executed by the processor 220, the processor 220 and the communication interface 230 are configured to execute a method executed by the cloud management platform 110 (including methods described in S101 to S110 and S201 to S205, and related steps of ensuring a bandwidth for communication between the first VPC and the second VPC). The memory 210 may further store data, for example, intermediate data or result data generated by the processor 220 in an execution process, for example, a network prefix of the global VPC 120 and an ACL.

The processor 220 may be a central processing unit (central processing unit, CPU), an application-specific integrated circuit (application-specific integrated circuit, ASIC), a graphics processing unit (graphics processing unit, GPU), or one or more integrated circuits.

The processor 220 may alternatively be an integrated circuit chip and has a signal processing capability. In an implementation process, some functions of the cloud management platform 110 may be implemented by using an integrated logic circuit of hardware in the processor 220 or an instruction in a form of software. Alternatively, the processor 220 may be a general purpose processor, a data signal processor (digital signal process, DSP), a field programmable logic gate array (field programmable gate array, FPGA), or another programmable logic device, a discrete gate or a transistor logic device, or a discrete hardware component, and may implement or execute the methods, steps, and logical block diagrams disclosed in embodiments of this application. The general purpose processor may be a microprocessor, or the processor may be any conventional processor or the like. The methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 210. The processor 220 reads information in the memory 210, and completes some or all functions of the cloud management platform 110 in combination with the hardware of the processor 220.

The communication interface 230 uses, for example, but is not limited to a transceiver module such as a transceiver, to implement communication between the computing device 200 and another device or a communication network. For example, configuration information (including configuration information A, configuration information B, and configuration information C) sent by a tenant is received through the communication interface 230.

The bus 240 may include a path for transmitting information between components (for example, the memory 210, the processor 220, and the communication interface 230) in the computing device 200.

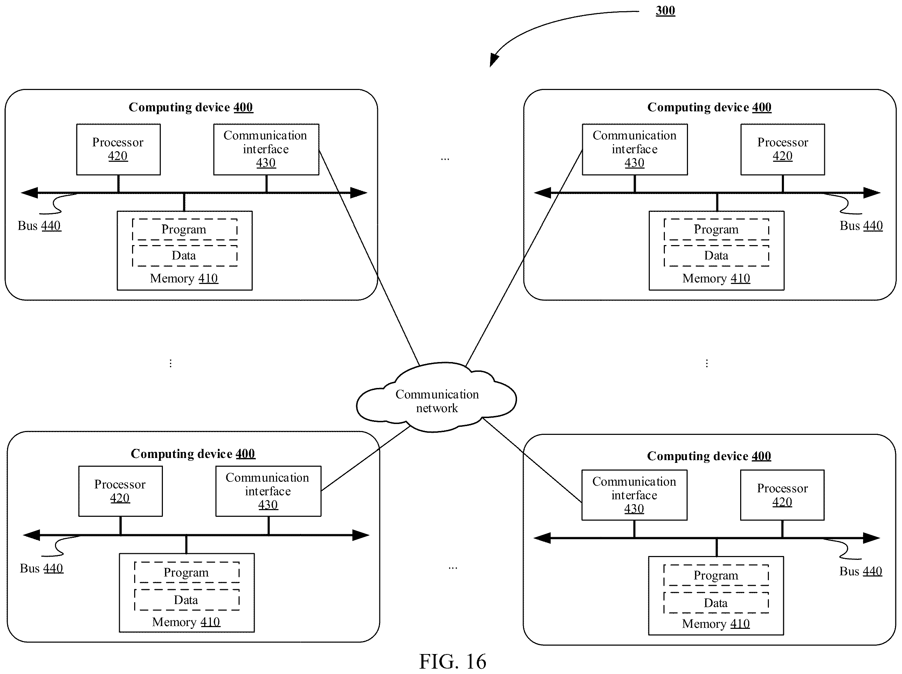

FIG. 16 is a diagram of a structure of a computing device system according to an embodiment of this application. The computing device system includes a plurality of computing devices, and the cloud management platform 110 may be deployed on the plurality of computing devices in the computing device system in a distributed manner. As shown in FIG. 16, the computing device system 300 includes a plurality of computing devices 400, and each computing device 400 includes a memory 410, a processor 420, a communication interface 430, and a bus 440. The memory 410, the processor 420, and the communication interface 430 are communicatively connected to each other through the bus 440.

The memory 410 may include a ROM, a RAM, a static storage device, a dynamic storage device, a hard disk (for example, an SSD or an HDD), and the like. The memory 410 may store program code, for example, a part of programs in a determining module 111, a part of programs in a control module 112, and a part of programs in a network configuration module 113. When program code stored in the memory 410 is executed by the processor 420, the processor 420 and the communication interface 430 are configured to execute a part of methods executed by the cloud management platform 110 (including a part of methods described in S101 to S110 and S201 to S205, and related steps of ensuring a bandwidth for communication between the first VPC and the second VPC). The memory 410 may further store data, for example, intermediate data or result data generated by the processor 420 in an execution process, for example, a network prefix of the global VPC 120 and an ACL.

The processor 420 may be a CPU, a GPU, an ASIC, or one or more integrated circuits. The processor 420 may alternatively be an integrated circuit chip and has a signal processing capability. In an implementation process, some functions of the cloud management platform 110 may be implemented by using an integrated logic circuit of hardware in the processor 420 or an instruction in a form of software. The processor 420 may alternatively be a DSP, an FPGA, a general purpose processor, another programmable logic device, a discrete gate or transistor logic device, or a discrete hardware component, and may implement or execute some methods, steps, and logical block diagrams disclosed in embodiments of this application. The general purpose processor may be a microprocessor, or the processor may be any conventional processor or the like. The steps of methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 410. The processor 420 reads information in the memory 410, and completes some functions of the cloud management platform 110 in combination with the hardware of the processor 420.

The communication interface 430 uses, for example, but is not limited to a transceiver module such as a transceiver, to implement communication between the computing device 400 and another computing device or a communication network. For example, configuration information (including configuration information A, configuration information B, and configuration information C) sent by a tenant is received through the communication interface 430.

The bus 440 may include a path for transmitting information between components (for example, the memory 410, the processor 420, and the communication interface 430) in the computing device 400.

A communication path is established between the plurality of computing devices 400 by using a communication network, to implement a function of the cloud management platform 110. Any computing device may be a computing device (for example, a server) in a cloud environment, a computing device in an edge environment, or a terminal computing device.

The foregoing descriptions of procedures corresponding to accompanying drawings have respective focuses. For a part of a procedure that is not described in detail, refer to a related description of another procedure.

All or some of the foregoing embodiments may be implemented using software, hardware, or a combination thereof. When software is used to implement the embodiments, all or some of the embodiments may be implemented in a form of a computer program product. The computer program product may include computing instructions executed by one or more cloud management platforms 110. When these computer program instructions are loaded and executed on a computer, all or some of the procedures or functions according to embodiments of this application are generated.

The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair cable) or wireless (for example, infrared, radio, or microwave) manner. The computer-readable storage medium stores computer program instructions that are executed by the cloud management platform 110. The computer-readable storage medium may be any usable medium accessible by the computer, or a data storage device, for example, a server or a data center, integrating one or more media. The available medium may be a magnetic medium (for example, a floppy disk, a hard disk, or a magnetic tape), an optical medium (for example, a compact disc), a semiconductor medium (for example, a solid state disk (solid state disk, SSD)), or the like.

## Claims

1. A method for communication between public cloud-based virtual private clouds VPCs, comprising:
Determining, by a cloud management platform, first configuration information entered or selected by a tenant, and creating a global VPC based on the first configuration information; and
determining, by the cloud management platform, second configuration information entered or selected by the tenant; and allocating, based on the second configuration information through the global VPC, a first network prefix to a first VPC located in a first region, and a second network prefix to a second VPC located in a second region, wherein the global VPC is used to implement cross-region communication between the first VPC and the second VPC based on the first network prefix and the second network prefix.

2. The method according to claim 1, wherein a region identifier in the first network prefix is different from a region identifier in the second network prefix.

3. The method according to claim 2, further comprising:
allocating, by the cloud management platform, a network prefix to the global VPC, wherein the first network prefix and the second network prefix further comprise the network prefix of the global VPC.

4. The method according to claim 3, further comprising:
establishing, by the cloud management platform, a network connection between the first VPC and the global VPC, and a network connection between the second VPC and the global VPC.

5. The method according to claim 4, wherein the global VPC stores the first network prefix, the second network prefix, and a routing relationship between the first network prefix and the second network prefix.

6. The method according to any one of claims 1 to 5, wherein the first VPC does not support communication with a third VPC.

7. The method according to claim 6, further comprising:
setting, by the cloud management platform, an access control list ACL of the first VPC, wherein the ACL comprises an entry used to block communication between the first VPC and the third VPC.

8. The method according to any one of claims 1 to 7, wherein the first VPC comprises a first subnet, and the method further comprises:
Allocating, by the cloud management platform, a network prefix to the first subnet through the global VPC, wherein the network prefix of the first subnet comprises the first network prefix and a subnet identifier.

9. The method according to claim 8, wherein the first subnet comprises a virtual machine VM, and the method further comprises:
allocating, by the cloud management platform, a network prefix to the VM through the global VPC or the first VPC, wherein a region identifier in the network prefix of the VM indicates that the VM supports migration to a VPC managed by the global VPC and capable of communicating with the first VPC.

10. The method according to claim 9, wherein the region identifier in the network prefix of the VM is different from a region identifier in a network prefix of any VPC managed by the global VPC.

11. The method according to claim 10, wherein the VPC managed by the global VPC and capable of communicating with the first VPC comprises the second VPC, and the method further comprises:
Migrating, by the cloud management platform, the VM from the first VPC to the second VPC, wherein the VM after migration is located in a second subnet of the second VPC, and a subnet identifier in a network prefix of the second subnet is the same as the subnet identifier in the network prefix of the first subnet.

12. The method according to claim 11, wherein a network prefix of the VM after migration is the same as the network prefix of the VM before migration.

13. The method according to any one of claims 1 to 12, further comprising:
allocating, by the cloud management platform, a bandwidth to the global VPC, wherein a data flow passing through the global VPC meets a requirement of the bandwidth.

14. The method according to claim 13, further comprising:
attaching, by the cloud management platform based on an identifier of the global VPC, a corresponding flow label to the data flow passing through the global VPC; and
obtaining, by the cloud management platform, the requirement of the bandwidth based on the flow label, and indicating forwarding of the data flow based on the requirement of the bandwidth.

15. The method according to any one of claims 3 to 14, wherein the network prefix of the global VPC is an internet protocol version 6 IPv6 prefix applied for by the cloud management platform.

16. The method according to any one of claims 3 to 14, wherein the network prefix of the global VPC is an IPv6 prefix generated by the cloud management platform.

17. The method according to any one of claims 3 to 14, wherein the network prefix of the global VPC is an IPv6 prefix applied for by the tenant.

18. A cloud management platform, comprising:
a determining module, configured to determine first configuration information and second configuration information entered or selected by a tenant; and
a control module, configured to: create a global virtual private cloud VPC based on the first configuration information; and allocate, based on the second configuration information through the global VPC, a first network prefix to a first VPC located in a first region, and a second network prefix to a second VPC located in a second region, wherein the global VPC is used to implement cross-region communication between the first VPC and the second VPC based on the first network prefix and the second network prefix.

19. The cloud management platform according to claim 18, wherein a region identifier in the first network prefix is different from a region identifier in the second network prefix.

20. The cloud management platform according to claim 19, wherein
the control module is further configured to allocate a network prefix to the global VPC, wherein the first network prefix and the second network prefix further comprise the network prefix of the global VPC.

21. The cloud management platform according to claim 20, further comprising:
a network configuration module, configured to establish a network connection between the first VPC and the global VPC, and a network connection between the second VPC and the global VPC.

22. The cloud management platform according to claim 21, wherein the global VPC stores the first network prefix, the second network prefix, and a routing relationship between the first network prefix and the second network prefix.

23. The cloud management platform according to any one of claims 18 to 22, wherein the first VPC does not support communication with a third VPC.

24. The cloud management platform according to claim 23, wherein
the network configuration module is further configured to set an access control list ACL of the first VPC, wherein the ACL comprises an entry used to block communication between the first VPC and the third VPC.

25. The cloud management platform according to any one of claims 18 to 24, wherein the first VPC comprises a first subnet, and
the control module is further configured to allocate a network prefix to the first subnet through the global VPC, wherein the network prefix of the first subnet comprises the first network prefix and a subnet identifier.

26. The cloud management platform according to claim 25, wherein the first subnet comprises a virtual machine VM, and
the control module is further configured to allocate a network prefix to the VM through the global VPC or the first VPC, wherein a region identifier in the network prefix of the VM indicates that the VM supports migration to a VPC managed by the global VPC and capable of communicating with the first VPC.

27. The cloud management platform according to claim 26, wherein the region identifier in the network prefix of the VM is different from a region identifier in a network prefix of any VPC managed by the global VPC.

28. The cloud management platform according to claim 27, wherein the VPC managed by the global VPC and capable of communicating with the first VPC comprises the second VPC, and
the control module is further configured to migrate the VM from the first VPC to the second VPC, wherein the VM after migration is located in a second subnet of the second VPC, and a subnet identifier in a network prefix of the second subnet is the same as the subnet identifier in the network prefix of the first subnet.

29. The cloud management platform according to claim 25, wherein a network prefix of the VM after migration is the same as the network prefix of the VM before migration.

30. The cloud management platform according to any one of claims 18 to 29, wherein
the control module is further configured to allocate a bandwidth to the global VPC, wherein a data flow passing through the global VPC meets a requirement of the bandwidth.

31. The cloud management platform according to claim 30, wherein
the control module is further configured to: attach, based on an identifier of the global VPC, a corresponding flow label to the data flow passing through the global VPC; and obtain the requirement of the bandwidth based on the flow label, and indicate forwarding of the data flow based on the requirement of the bandwidth.

32. The cloud management platform according to any one of claims 20 to 31, wherein the network prefix of the global VPC is an internet protocol version 6 IPv6 prefix applied for by the cloud management platform.

33. The cloud management platform according to any one of claims 20 to 31, wherein the network prefix of the global VPC is an IPv6 prefix generated by the cloud management platform.

34. The cloud management platform according to any one of claims 20 to 31, wherein the network prefix of the global VPC is an IPv6 prefix applied for by the tenant.

35. A communication system, comprising the cloud management platform, the global virtual private cloud VPC, the first VPC located in the first region, and the second VPC located in the second region according to any one of claims 1 to 17.

36. A computing device, comprising a processor and a memory, wherein the processor executes computer program code in the memory to implement the method according to any one of claims 1 to 17.

37. A computer-readable storage medium, storing computer program code, wherein when the computer program code is executed by a computing device, the computing device performs the method according to any one of claims 1 to 17.
